# FASCICULE DE BREVET EUROPEEN

(11) **EP 3 775 795 B1**
(45) Date de publication et mention de la délivrance du brevet: **20.04.2022**
(21) Numéro de dépôt: 19715176.4
(22) Date de dépôt: 13.03.2019
(51) Int. Cl.: G01F 23/16, G01F 23/292, G01L 9/00, G01L 15/00, G01L 11/02

(54) **DISPOSITIF ET PROCÉDÉ POUR LA DÉTERMINATION DU NIVEAU D'INTERFACE DE PHASE DANS UN RÉSERVOIR**
VORRICHTUNG UND VERFAHREN ZUR BESTIMMUNG DES PHASENGRENZSPIEGELS IN EINEM TANK
DEVICE AND METHOD FOR DETERMINING THE PHASE INTERFACE LEVEL IN A TANK

(30) Priorité: 11.04.2018 FR 1853151
(43) Date de publication de la demande: 17.02.2021
(73) Titulaire: SAIPEM S.A., 78180 Montigny Le Bretonneux (FR)
(72) Inventeur: HALLOT, Raymond, 78960 Voisins Le Bretonneux (FR)
(74) Mandataire: Cabinet Beau de Loménie
(86) Numéro de dépôt international: PCT/FR2019/050547
(87) Numéro de publication internationale: WO 2019/197739

(56) Documents cités:
- EP-A1- 2 696 182
- WO-A1-2009/078734

## Description

### Arrière-plan de l'invention

La présente invention se rapporte au domaine général des réservoirs, notamment de séparateurs gravitaires polyphasiques utilisés dans le domaine de la production d'hydrocarbures, par exemple de pétrole et de gaz.

Elle vise plus particulièrement un dispositif permettant de déterminer le niveau d'interface de phase dans un réservoir de séparation gravitaire, par exemple sous-marin, utilisé pour séparer les phases aqueuses, gazeuses et huileuses de fluides provenant d'un puits de production d'hydrocarbures.

L'extraction des puits de production d'hydrocarbures sous-marin génère un mélange polyphasique (eau, pétrole, gaz et sable) qu'il est nécessaire de traiter pour ne récupérer que ce qui va être utilisé, à savoir le pétrole et le gaz. Généralement, ce mélange polyphasique est remonté à bord d'un FPSO (pour « Floating Production Storage Offloading» en anglais, à savoir un support flottant de stockage, de production et de déchargement) pour y être traité en vue de séparer le pétrole proprement dit, de l'eau, du gaz, et d'éventuels composants solides. Le pétrole, une fois séparé, est alors stocké à bord, le gaz est lavé, puis envoyé vers les turbines à gaz pour la production de l'électricité et de la chaleur nécessaire à bord, puis le surplus est réinjecté dans le réservoir du champ pétrolier de manière à le remettre en pression. L'eau, après avoir été libérée des particules solides en suspension, est soit rejetée en mer après extraction des éventuelles particules d'huile, soit réinjectée elle aussi dans le réservoir. Enfin, les particules solides extraites, qui ne représentent que des quantités minimes, sont pour partie retraitées et recyclées sur place pour être rejetées en mer ou dans des bassins spéciaux, et pour partie envoyées à terre pour traitement et stockage et/ou réinjectées dans le sous-sol par le puits.

L'un des procédés connus de séparation de l'eau et de l'huile contenus dans le mélange polyphasique extrait du puits de production consiste à utiliser un réservoir de très grand volume, en général de forme cylindrique : le pétrole entre à une extrémité du réservoir et chemine le long de celui-ci pour permettre aux différentes phases du mélange de se séparer naturellement par gravité et atteindre l'autre extrémité du réservoir. Ce type de séparateur ci-après dénommé « séparateur gravitaire » est en général utilisé pour du pétrole brut contenant également du gaz, le gaz étant alors récupéré en partie haute du réservoir, l'eau et le sable en partie basse, et le pétrole (huile) en partie intermédiaire.

Par ailleurs, il peut être souvent avantageux de réaliser la séparation du mélange polyphasique extrait du puits de production directement au fond de la mer pour n'avoir à remonter en surface que les phases hydrocarbures et non pas la phase aqueuse, laquelle peut être réinjectée dans un autre puits au fond de la mer.

A cet effet, il est connu de recourir à des séparateurs gravitaires sous-marin installés au fond de la mer. On connaît ainsi du document WO 2011/161343 un séparateur gravitaire sous-marin comprenant notamment une pluralité de conduites cylindriques positionnées de façon horizontale et parallèles les unes aux autres, ces conduites formant des réservoirs dans lesquels circule le mélange polyphasique extrait du puits de production. Au cours de cette circulation, les différentes phases du mélange se séparent naturellement par gravité : l'eau repose au fond du réservoir, l'huile est au-dessus de l'eau et le gaz est au-dessus de l'huile. En sortie des conduites, l'eau est typiquement récupérée pour être traitée avant d'être réinjectée dans le puits par des pompes d'injection d'eau, tandis que les phases huileuse et gazeuse sont acheminées en surface vers le FPSO.

Lorsque les différentes phases du mélange polyphasique présent dans le réservoir du séparateur gravitaire se sont séparées, il est important de mesurer avec précision le niveau d'interface de phase dans le réservoir, c'est-à-dire le niveau dans le réservoir entre deux phases superposées (interface eau/huile et interface huile/gaz). Le résultat de cette mesure permet en effet d'assurer une parfaite régulation du débit des pompes d'injection d'eau, ce qui améliore le fonctionnement du séparateur.

La mesure du niveau d'interface de phase dans le réservoir d'un séparateur gravitaire est généralement réalisée par des capteurs de niveau à rayons gamma comme décrit notamment dans la publication EP 2,329,234. Or, ce type de capteur met en œuvre des sources de rayonnement préjudiciables à l'environnement sous-marin ainsi que sur le plan d'hygiène et de sécurité pour le personnel. De plus, les détecteurs associés à ces capteurs sont des composants complexes à fiabilité faible selon les opérateurs, ce qui rend les résultats des mesures imprécis.

On connaît également la publication EP 1,184,647 qui décrit un procédé de mesure combinée inductive et capacitive d'un niveau d'interface, ainsi que la publication WO 2009/063194 qui divulgue un système de mesure d'un niveau d'interface par ultrasons. On connaît encore la publication WO 2009/078734 qui décrit un dispositif selon le préambule de la revendication 1.

### Objet et résumé de l'invention

La présente invention a donc pour but principal de proposer un dispositif pour la détermination du niveau d'interface de phase qui ne présente pas les inconvénients précités.

Conformément à l'invention, ce but est atteint grâce à un dispositif pour la détermination du niveau d'interface de phase d'un système polyphasique, comprenant un réservoir destiné à recevoir un système polyphasique comprenant au moins deux fluides ayant des phases distinctes, et un tube plongé verticalement à l'intérieur du réservoir, ledit tube étant destiné à être rempli d'un fluide en équi-pression avec le fluide contenu dans le réservoir au niveau d'un ciel du dit réservoir, chaque capteur de pression différentielle comprend une membrane étanche résistante à la corrosion qui est montée dans un orifice du tube et qui est fixée à un capteur de déformation à fibre optique à réseau de Bragg, la déformation de ladite membrane étant destinée à mesurer un différentiel de pression entre, d'une part le mélange polyphasique contenu dans le réservoir, et d'autre part le fluide contenu dans le tube; et en ce que les orifices du tube dans lesquels sont montées les membranes des capteurs de pression différentielle sont positionnés sur plusieurs faces latérales du tube, chaque face latérale du tube étant munie du même nombre de capteurs de pression différentielle espacés d'un même pas en hauteur depuis une hauteur initiale différente à partir d'une extrémité inférieure du tube afin d'augmenter la résolution spatiale de la mesure.

Le dispositif selon l'invention est remarquable notamment en ce qu'il utilise des capteurs de pression différentielle par membrane espacés en chapelets de capteurs sur toute la hauteur du réservoir pour déterminer les niveaux d'interface de phase du système polyphasique. L'invention part du constat que les différentes phases du système polyphasique contenu dans le réservoir ont des densités différentes, ces différences de densités générant un gradient de pression sur la hauteur du réservoir. Ainsi, grâce à la connaissance des variations de gradient de pression sur toute la hauteur du réservoir et d'un calcul de régression linéaire, il est possible de déterminer avec précision le niveau d'interface de phase au sein du réservoir. En effet, les interfaces de phase sont localisées aux hauteurs pour lesquelles la densité du système change, c'est-à-dire aux hauteurs pour lesquelles le gradient de pression varie.

On notera que la variation de pression absolue en fonction de l'élévation des points de mesure (de l'ordre de quelques millibars) étant très faible par rapport à la valeur de pression dans le réservoir (de l'ordre de plusieurs dizaines de bar) et sa variabilité (de 1 bar à plusieurs centaines de bar), les inventeurs ont astucieusement résolu cette contradiction en remplissant le tube avec un fluide en équi-pression avec le ciel du réservoir contenu dans le réservoir. De la sorte, les capteurs de pression différentielle ne mesurent que les écarts de pression dans les phases liquides par rapport à la pression de la phase gazeuse.

On notera encore que le dispositif selon l'invention est neutre vis-à-vis du personnel lors de l'installation et de l'environnement sous-marin (il n'émet aucun rayonnement nocif). Enfin, on notera que le dispositif selon l'invention présente un coût comparativement avantageux car les composants en environnement sous-marin sont réduits et les constituants complexes peuvent être déportés en surface.

Chaque capteur de pression différentielle comprend une membrane étanche résistante à la corrosion qui est montée dans un orifice du tube et qui est fixée à un capteur de déformation à fibre optique à réseau de Bragg, la déformation de ladite membrane étant destinée à mesurer un différentiel de pression entre, d'une part le système polyphasique contenu dans le réservoir, et d'autre part le fluide contenu dans le tube.

On notera que le recours à des capteurs de déformation à fibres optiques à réseaux de Bragg pour l'acquisition du gradient de pression obtenu par la déformation des membranes est particulièrement avantageux : ces capteurs à fibres optiques sont fiables vis-à-vis de l'environnement sous-marin, insensibles à l'entrée d'eau et aux perturbations électromagnétiques. Par ailleurs, l'électronique de traitement des données peut être placée en surface dans un environnement contrôlable et accessible à la maintenance.

Les membranes des capteurs de pression différentielle s'étendent de préférence sur toute la hauteur du réservoir.

De même, les orifices du tube dans lesquels sont montées les membranes des capteurs de pression différentielle sont positionnés sur plusieurs faces latérales du tube, chaque face latérale du tube étant munie du même nombre de capteurs de pression différentielle étant espacés d'un même pas en hauteur depuis une hauteur initiale différente à partir d'une extrémité inférieure du tube afin d'augmenter la résolution spatiale de la mesure.

Quant aux capteurs de déformation à fibres optiques à réseaux de Bragg, ils sont de préférence fixés au centre de la membrane de chaque capteur de pression différentielle. Les capteurs de déformation à fibres optiques à réseaux de Bragg peuvent être avantageusement répartis en plusieurs réseaux indépendants de capteurs de déformation afin d'obtenir une redondance de la chaîne de mesure.

De préférence, le tube comprend une cavité centrale destinée à être remplie d'un fluide en équi-pression avec le fluide contenu dans le réservoir au niveau du ciel dudit réservoir, ladite cavité centrale étant fermée à une extrémité inférieure et obturée à une extrémité supérieure par un soufflet de dilatation. Ce soufflet de dilatation permet d'accommoder les possibles variations de volume de fluide d'équi-pression tout en lui transmettant la pression externe du ciel gazeux.

L'invention a également pour objet un procédé de détermination du niveau d'interface de phase dans un réservoir recevant un système polyphasique au moyen d'un dispositif tel que défini précédemment, le dispositif comprenant :
pour chaque capteur de pression différentielle Cⱼ, avec 1<j≤n, le calcul de la pente de la droite de mesures de pression différentielle associée aux deux capteurs de pression différentielle Cⱼ₋₁, Cⱼ ;
pour chaque capteur de pression différentielle Cⱼ, avec 2<j<n, le calcul de la variance associée à chaque ensemble de capteurs C₂ à Cⱼ de la pente de la droite de mesures de pression différentielle associée aux deux capteurs de pression différentielle Cⱼ₋₁, Cⱼ ;
pour chaque capteur de pression différentielle Cⱼ, avec 2<j<n, le calcul de la variance associée à chaque ensemble de capteurs Cⱼ₊₁ à Cₙ de la pente de la droite de mesures de pression différentielle associée aux deux capteurs de pression différentielle Cⱼ₋₁, Cⱼ ;
pour chaque capteur de pression différentielle Cⱼ, avec 2<j<n, le calcul de la somme des deux variances précédemment calculées ;
la localisation d'au moins un minimum local de la somme des deux variances précédemment calculées afin d'identifier le capteur Cⱼ correspondant à un niveau d'interface de phase ; et
l'intersection de la droite de régression linéaire des mesures des capteurs Cⱼ à C₁ avec la droite de régression linéaire des mesures des capteurs Cⱼ₊₁ à Cₙ pour identifier la hauteur du niveau d'interface de phase.

En cas de localisation de deux minima locaux qui identifient deux capteurs Cⱼ et Cₖ, l'intersection de la droite de régression linéaire des mesures des capteurs de pression différentielle Cⱼ à C₁ avec la droite de régression linéaire des mesures des capteurs de pression différentielle Cⱼ₊₁ à Cₖ identifie précisément une première hauteur de niveau d'interface de phase, et l'intersection de la droite de régression linéaire des mesures des capteurs de pression différentielle Cₖ₊₁ à Cₙ avec la droite de régression linéaire des mesures des capteurs de pression différentielle Cⱼ₊₁ à Cₖ identifie précisément une deuxième hauteur de niveau d'interface de phase différente de la première hauteur.

Le calcul des pentes de droites de régression linéaire est de préférence réalisé par la méthode des moindres carrés. Le tube du dispositif peut être rempli d'un liquide ayant un point bas de congélation et un point haut d'ébullition, par exemple du glycol.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en coupe d'un réservoir cylindrique de séparation gravitaire polyphasique équipé d'un dispositif pour la détermination du niveau d'interface de phase selon l'invention ;
- la figure 2 est une vue en perspective du tube du dispositif de la figure 1 ;
- la figure 3 est une vue en coupe longitudinale de la figure 2 ;
- la figure 4 est une vue en coupe selon IV-IV du tube de la figure 3 ; et
- les figures 5A et 5B illustrent deux exemples de courbes de différentiel de pression en fonction de la hauteur dans un réservoir de séparation gravitaire obtenue par la mise en œuvre du procédé de détermination du niveau d'interface de phase selon l'invention.

### Description détaillée de l'invention

L'invention concerne un dispositif pour la détermination du niveau d'interface de phase dans un réservoir de système polyphasique, notamment dans un réservoir de séparation gravitaire polyphasique, par exemple sous-marin, c'est-à-dire un dispositif permettant de mesurer à l'intérieur d'un réservoir les niveaux entre les différentes phases séparées en plusieurs strates superposées d'un mélange initialement polyphasique (notamment eau, gaz et huile).

Par « système polyphasique », on entend ici un mélange d'au moins deux fluides ayant des phases différentes, à savoir notamment un mélange de fluides dans des phases différentes (i.e. phase liquide, phase aqueuse et phase gazeuse), ou un mélange d'au moins deux liquides non miscibles entre eux.

Typiquement, un séparateur gravitaire polyphasique sous-marin comprend notamment plusieurs conduites de forme cylindrique qui sont alignées horizontalement et parallèlement les unes aux autres. Ces conduites forment des réservoirs dans lesquels le mélange polyphasique (par exemple un mélange extrait d'un puits de production d'hydrocarbures) est injecté à l'une des extrémités. Les conduites sont suffisamment longues pour permettre aux différentes phases du mélange de se séparer par gravité à l'intérieur des conduites. A l'extrémité opposée à leur injection, les conduites sont reliées à une ou plusieurs pompes qui vont aspirer les phases huileuse et gazeuse du mélange pour les envoyer en surface (vers un FPSO), tandis que la phase aqueuse est aspirée par une autre pompe pour être renvoyée vers le puits de production.

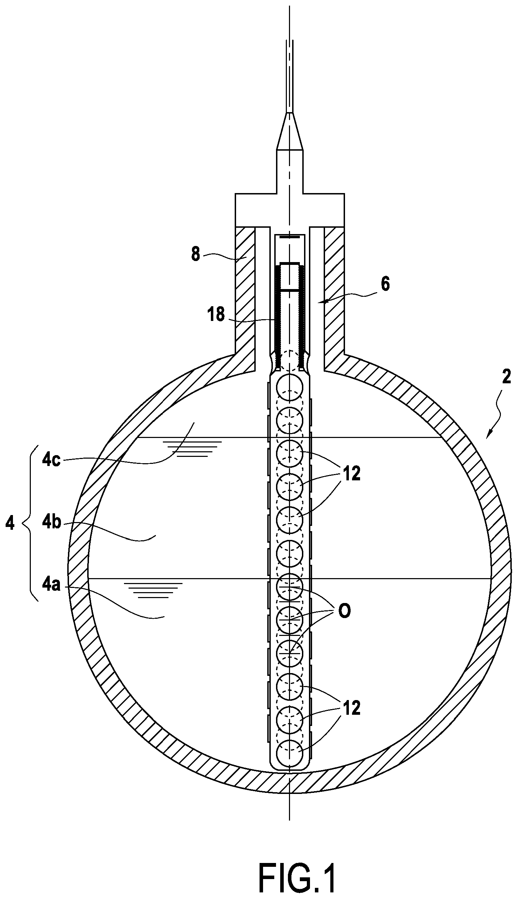

La figure 1 représente, en section droite, une conduite formant réservoir 2 d'un tel séparateur gravitaire polyphasique sous-marin. Bien entendu, la présente invention ne se limite pas aux séparateurs gravitaires sous-marins mais s'applique également aux séparateurs gravitaires terrestres, et de manière générale à tout type de réservoir, à l'air libre ou non.

Le réservoir 2 présente une section droite de forme circulaire. Il est rempli d'un mélange polyphasique 4 qui, sous l'effet de la gravité, a vu ses phases se séparer en un fluide dans un état liquide (couche d'eau 4a en bas du réservoir), un fluide dans un état huileux (couche d'huile 4b au-dessus de la couche d'eau), et un fluide dans un état gazeux (couche de gaz 4c au-dessus de la couche d'huile).

Un tube 6 d'axe longitudinal X-X est monté verticalement à l'intérieur du réservoir 2 en étant plongé dans le mélange polyphasique 4. Plus précisément, le tube 6 traverse de part en part le réservoir et est fixé dans sa partie supérieure sur un piquage vertical 8 du réservoir.

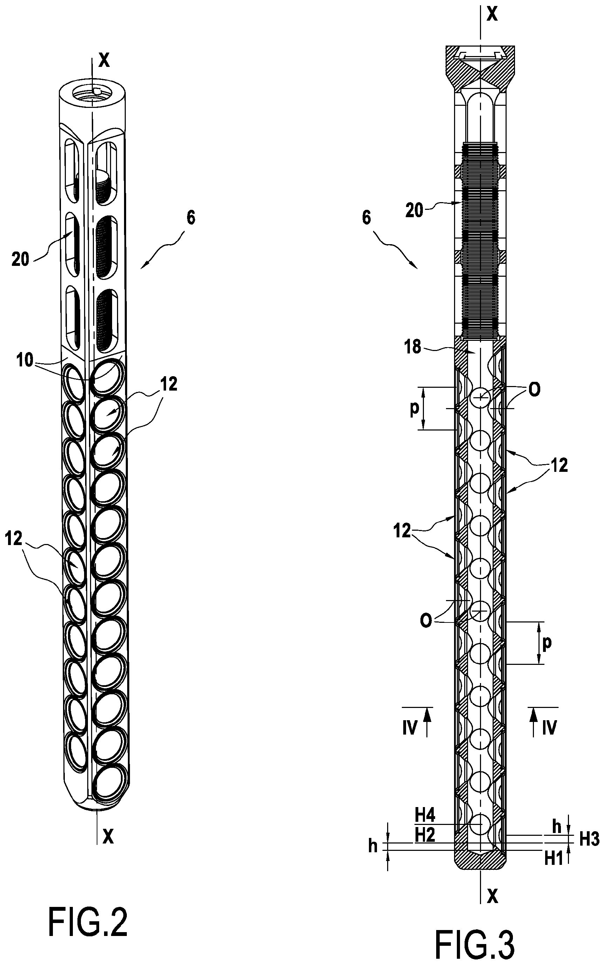

Comme représenté sur les figures 2 et 3, le tube 6 peut présenter, dans sa partie plongée dans le réservoir, une section droite de forme sensiblement carrée avec quatre faces latérales 10. Plus généralement, cette section droite du tube pourra avoir une forme polygonale (par exemple hexagonale). Par ailleurs, dans le cas d'un tube de grande hauteur, celui-ci ne pourra présenter qu'une seule face équipée de capteurs de pression différentielle selon un mode de réalisation non revendiqué.

Chacune de ces faces latérales 10 comprend de préférence le même nombre n de capteurs de pression différentielle 12 (dans l'exemple illustré sur les figures 1 à 3, le nombre n de capteurs de pression différentielle est égal à 11 sur une face et à 12 sur une deuxième face).

Les capteurs de pression différentielle 12 sont répartis sur toute la hauteur du réservoir. Pour chaque face latérale 10 du tube, les capteurs de pression différentielle sont espacés d'un même pas p en hauteur depuis une hauteur initiale, respectivement H1, H2, H3, H4, différente à partir d'une extrémité inférieure du tube.

Sur la figure 3, sont représentées les hauteurs initiales respectives H1 à H4 pour l'ensemble des faces latérales 10 du tube. On comprendra que ces hauteurs initiales sont décalées longitudinalement les unes par rapport aux autres d'une même distance h.

De préférence, la distance h entre les hauteurs initiales respectives H1 à Hf (dans le cas d'un tube 6 à section droite sous forme de polygone à f faces latérales) est égale à p/(f-1), p étant le pas d'espacement entre deux capteurs de pression différentielle adjacents. Ainsi, dans l'exemple d'un tube 6 ayant quatre faces latérales, la distance h entre les hauteurs initiales respectives H1 à H4 est de préférence égale à p/3.

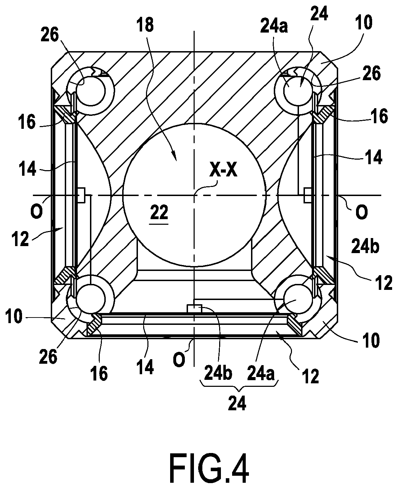

Par ailleurs, comme représenté plus précisément sur la figure 4, chaque capteur de pression différentielle 12 est composé d'une membrane 14 étanche (ou tympan) en matière résistante à la corrosion (par exemple en alliage ou en verre) qui est montée de façon étanche dans un orifice 16 pratiqué dans les faces latérales 10 du tube et d'un capteur de déformation à fibre optique à réseau de Bragg 24 qui est fixé à la membrane 14.

La membrane 14 de ces capteurs de pression différentielle sépare ainsi l'intérieur du tube de l'intérieur du réservoir 2. La membrane est ainsi soumise à un différentiel de pression entre, d'une part le mélange polyphasique 4 contenu dans le réservoir, et d'autre part le fluide 22 contenu dans le tube.

On notera que les membranes 14 forment, pour chaque face latérale 10 du tube, un chapelet de capteurs ponctuels qui couvrent toute la hauteur du réservoir (les membranes sont réparties sur toute la hauteur du réservoir).

On notera également que les orifices 16 (par exemple de forme circulaires) pratiqués dans les faces latérales 10 du tube et dans lesquels sont montées les membranes 14 des capteurs de pression différentielle peuvent être alignés, pour chaque face latérale du tube, sur un axe parallèle à l'axe longitudinal X-X du tube.

De plus, l'intérieur du tube 6 comprend une cavité centrale 18 qui est fermée au niveau de l'extrémité inférieure du tube, obturée dans sa partie supérieure par un soufflet métallique de dilatation 20 et qui reçoit un fluide 22 ayant un point bas de congélation et un point haut d'ébullition (typiquement du glycol ou des huiles hydrauliques).

Lorsque la température varie, le fluide 22 contenu dans la cavité centrale 18 du tube va voir son volume varier et cette variation est reprise par le soufflet de dilatation 20. Grâce à la souplesse du soufflet de dilatation, toute variation de volume interne n'entraînera pas de variation de pression à l'intérieur de la cavité centrale 18 du tube.

Par ailleurs, la grande souplesse du soufflet de dilatation permet d'affirmer que la pression à l'intérieur du tube est égale à la pression extérieure, de sorte que le soufflet de dilatation transmet la pression extérieure au fluide 22 contenu à l'intérieur du tube. On parle de mise en équi-pression de l'intérieur du tube avec le ciel gazeux du fluide 4c.

En pratique, le tube 6 est généralement préparé de la manière suivante : tirage au vide, puis remplissage par le fluide 22, en l'occurrence du glycol ou des huiles hydrauliques pour l'application à un séparateur d'hydrocarbures et fermeture par bouchon étanche.

Le soufflet de dilatation 20 est plus précisément positionné au niveau de la partie supérieure du tube qui traverse l'épaulement vertical 8 du réservoir.

Toujours selon l'invention, les capteurs de pression différentielle 12 comprennent, pour l'acquisition de la mesure du différentiel de pression, des capteurs de déformation à fibres optiques à réseaux de Bragg 24 fixés aux membranes 14 (la déformation des membranes sous l'effet du différentiel de pression se traduit en élongation ou contraction de la fibre optique à réseau de Bragg).

A cet effet, comme représenté sur la figure 4, le tube 6 comprend quatre trous latéraux 26 qui s'étendent longitudinalement sur toute la hauteur du tube. Les fibres optiques des capteurs de déformation à fibres optiques à réseaux de Bragg 24 présentent un point de mesure 24a fixé par collage au centre des membranes 14 et une partie 24b qui chemine entre deux points de mesure adjacents en empruntant les trous latéraux 26.

Différentes configurations sont possibles pour les capteurs de déformation à fibres optiques à réseaux de Bragg 24. On peut envisager une chaîne de 11 ou 12 capteurs de déformation à fibres optiques pour chaque face latérale 10 du tube (chaque chaîne faisant un aller et éventuellement un retour dans l'un des trous latéraux 26 du tube), ou bien deux chaînes de deux fois 11 ou 12 capteurs de déformation à fibres optiques (avec l'aller par deux trous latéraux et retour par les deux autres trous latéraux), ou bien encore une chaîne de quatre fois 11 ou 12 capteurs de déformation à fibres optiques pour l'ensemble des quatre faces latérales.

De préférence, afin d'obtenir une redondance de mesures par l'acquisition de deux chaînes de mesures indépendantes, il est encore possible de positionner deux chaînes de capteurs de déformation à fibres optiques à réseaux de Bragg côté à côté sur la même membrane.

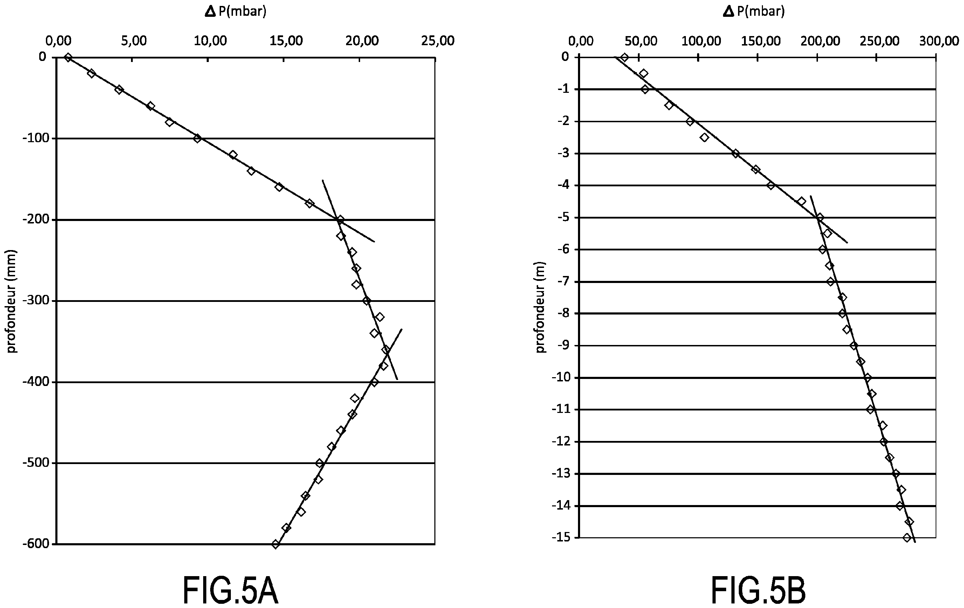

Un exemple d'algorithme non limitatif de détermination du niveau d'interface de phase par le dispositif selon l'invention tel que décrit précédemment est décrit ci-après en liaison avec les figures 5A et 5B.

Pour chaque ensemble de deux capteurs de pression différentielle consécutifs Cⱼ, Cⱼ₊₁, des moyens logiciels calculent :
- pour chaque capteur de pression différentielle Cⱼ, avec 1<j≤n, la pente de la droite de mesures de pression différentielle associée aux deux capteurs de pression différentielle Cⱼ₋₁, Cⱼ ;
- pour chaque capteur de pression différentielle Cⱼ, avec 2<j<n, la variance associée à chaque ensemble de capteurs C₂ à Cⱼ de la pente de la droite de mesures de pression différentielle associée aux deux capteurs de pression différentielle Cⱼ₋₁, Cⱼ ;
- pour chaque capteur de pression différentielle Cⱼ, avec 2<j<n, la variance associée à chaque ensemble de capteurs Cⱼ₊₁ à Cₙ de la pente de la droite de mesures de pression différentielle associée aux deux capteurs de pression différentielle Cⱼ₋₁, Cⱼ ; et
- pour chaque capteur de pression différentielle Cⱼ, avec 2<j<n, la somme des deux variances précédemment calculées.

A partir de ces calculs, les moyens logiciels localisent au moins un minimum local de la somme des deux variances précédemment calculées, ce minimum local étant identifié à un capteur Cₖ correspondant à un niveau d'interface de phase.

Les moyens logiciels construisent alors la droite de régression linéaire des mesures des capteurs Cₖ à C₁ d'une part, et la droite de régression linéaire des mesures des capteurs Cₖ₊₁ à Cₙ d'autre part. L'intersection de ces deux droites de régression linéaire identifie précisément la hauteur du niveau d'interface de phase.

Lorsqu'il existe deux minima locaux qui identifient deux capteurs Cₗ et Cₖ, l'intersection de la droite de régression linéaire des mesures des capteurs Cₗ à C₁ avec la droite de régression linéaire des mesures des capteurs Cₗ₊₁ à Cₖ identifie précisément une première hauteur de niveau d'interface de phase, et l'intersection de la droite de régression linéaire des mesures des capteurs Cₖ₊₁ à Cₙ avec la droite de régression linéaire des mesures des capteurs Cₗ₊₁ à Cₖ identifie précisément une deuxième hauteur de niveau d'interface de phase.

Le nombre d'extrema recherchés correspond au nombre d'interfaces de phase recherchés (un seul extremum pour un fluide stratifié en deux phases, et deux extrema pour un fluide stratifié en trois phases).

Un premier exemple de données ainsi calculées est proposé dans le tableau 1 ci-dessous et illustré par la courbe de la figure 5A. Cet exemple s'applique au cas d'un fluide présent dans un réservoir de séparation gravitaire qui se présente sous une stratification de trois phases différentes, à savoir une phase gazeuse, une phase aqueuse, et une phase liquide. Les mesures ont été réalisées au moyen de 31 capteurs de pression différentielle espacés les uns des autres entre une profondeur du réservoir égale à Omm (pour le capteur le plus en haut) jusqu'à une profondeur du réservoir égale à -600mm (pour le capteur le plus en bas).

La figure 5A représente pour ce premier exemple la courbe de différentiel de pression ΔP (en mbar) mesuré par les capteurs de différentiel de pression en fonction de la profondeur (en mm) dans le réservoir de séparation gravitaire.

**Tableau 1**

| Cⱼ | ΔP (mbar) | profondeur (mm) | pentes des droites reliant 2 capteurs consécutifs | variance 1 des pentes | variance 2 des pentes | somme des variances |
|---|---|---|---|---|---|---|
| 1 | 0.78 | 0 | | | | |
| 2 | 2.33 | -20 | -0.08 | | | |
| 3 | 4.16 | -40 | -0.09 | 0.00005 | 0.00289 | 0.00294 |
| 4 | 6.23 | -60 | -0.10 | 0.00011 | 0.00272 | 0.00284 |
| 5 | 7.50 | -80 | -0.06 | 0.00023 | 0.00274 | 0.00296 |
| 6 | 9.33 | -100 | -0.09 | 0.00019 | 0.00259 | 0.00278 |
| 7 | 11.67 | -120 | -0.12 | 0.00030 | 0.00220 | 0.00250 |
| 8 | 12.89 | -140 | -0.06 | 0.00037 | 0.00216 | 0.00253 |
| 9 | 14.73 | -160 | -0.09 | 0.00032 | 0.00189 | 0.00221 |
| 10 | 16.73 | -180 | -0.10 | 0.00030 | 0.00148 | 0.00178 |
| 11 | 18.76 | -200 | -0.10 | 0.00029 | 0.00095 | **0.00124** |
| 12 | 18.80 | -220 | 0.00 | 0.00091 | 0.00099 | 0.00189 |
| 13 | 19.54 | -240 | -0.04 | 0.00098 | 0.00091 | 0.00189 |
| 14 | 19.82 | -260 | -0.01 | 0.00120 | 0.00091 | 0.00211 |
| 15 | 19.80 | -280 | 0.00 | 0.00148 | 0.00095 | 0.00243 |
| 16 | 20.49 | -300 | -0.03 | 0.00145 | 0.00083 | 0.00228 |
| 17 | 21.36 | -320 | -0.04 | 0.00139 | 0.00058 | 0.00197 |
| 18 | 21.00 | -340 | 0.02 | 0.00168 | 0.00062 | 0.00230 |
| 19 | 21.76 | -360 | -0.04 | 0.00161 | 0.00032 | **0.00193** |
| 20 | 21.60 | -380 | 0.01 | 0.00175 | 0.00030 | 0.00204 |
| 21 | 21.00 | -400 | 0.03 | 0.00200 | 0.00032 | 0.00233 |
| 22 | 19.71 | -420 | 0.06 | 0.00250 | 0.00024 | 0.00274 |
| 23 | 19.55 | -440 | 0.01 | 0.00251 | 0.00020 | 0.00271 |
| 24 | 18.80 | -460 | 0.04 | 0.00267 | 0.00023 | 0.00290 |
| 25 | 18.18 | -480 | 0.03 | 0.00276 | 0.00026 | 0.00302 |
| 26 | 17.38 | -500 | 0.04 | 0.00287 | 0.00029 | 0.00316 |
| 27 | 17.30 | -520 | 0.00 | 0.00281 | 0.00017 | 0.00298 |
| 28 | 16.46 | -540 | 0.04 | 0.00290 | 0.00021 | 0.00311 |
| 29 | 16.17 | -560 | 0.01 | 0.00286 | 0.00005 | 0.00291 |
| 30 | 15.19 | -580 | 0.05 | 0.00296 | 0.00000 | 0.00296 |
| 31 | 14.49 | -600 | 0.04 | | | |

Dans ce premier exemple, on identifie deux extrema pour la somme des variances, à savoir pour le « capteur 11 » situé à une profondeur de -200mm et pour le « capteur 19 » situé à une profondeur de -360mm.

On en déduit donc que l'interface entre les phases gazeuse et aqueuse du fluide contenu dans le réservoir de séparation gravitaire se situe au niveau du capteur 11 à une profondeur plus précisément calculée par régression linéaire de -208,56mm dans le réservoir et que l'interface entre les phases aqueuse et liquide du fluide se situe au niveau du capteur 9 à une profondeur plus précisément calculée par régression linéaire de-365,40mmdans le réservoir.

Un second exemple de données est proposé dans le tableau 2 ci-dessous. Cet exemple s'applique au cas d'un fluide présent dans un réservoir de séparation gravitaire qui se présente sous une stratification de deux phases différentes, à savoir une phase gazeuse et une phase liquide.

Comme pour l'exemple précédent, les mesures ont été réalisées au moyen de 31 capteurs de pression différentielle espacés les uns des autres entre une profondeur du réservoir égale à Om (pour le capteur le plus en haut) jusqu'à une profondeur du réservoir égale à -15m (pour le capteur le plus en bas).

La figure 5B représente pour ce premier exemple la courbe de différentiel de pression ΔP (en mbar) mesuré par les capteurs de différentiel de pression en fonction de la profondeur (en m) dans le réservoir.

**Tableau 2**

| Cⱼ | ΔP (mbar) | profondeur (m) | pentes des droites reliant 2 capteurs consécutifs | variance 1 des pentes | variance 2 des pentes | somme des variances |
|---|---|---|---|---|---|---|
| 1 | 38.32 | 0 | | | | |
| 2 | 54.35 | -0.5 | -32.04 | | | |
| 3 | 55.45 | -1 | -2.21 | 14.92 | 15.82 | 30.73 |
| 4 | 75.56 | -1.5 | -40.22 | 16.34 | 15.37 | 31.71 |
| 5 | 93.17 | -2 | -35.22 | 14.84 | 15.13 | 29.97 |
| 6 | 105.41 | -2.5 | -24.47 | 13.33 | 15.28 | 28.61 |
| 7 | 131.62 | -3 | -52.41 | 15.46 | 13.33 | 28.79 |
| 8 | 148.53 | -3.5 | -33.83 | 14.34 | 12.80 | 27.15 |
| 9 | 161.15 | -4 | -25.24 | 13.58 | 12.72 | 26.30 |
| 10 | 186.96 | -4.5 | -51.62 | 14.39 | 9.21 | 23.59 |
| 11 | 202.45 | -5 | -30.98 | 13.66 | 7.89 | **21.56** |
| 12 | 208.69 | -5.5 | -12.47 | 14.28 | 8.01 | 22.29 |
| 13 | 204.52 | -6 | 8.33 | 17.46 | 7.34 | 24.80 |
| 14 | 210.49 | -6.5 | -11.93 | 17.30 | 7.48 | 24.78 |
| 15 | 211.18 | -7 | -1.39 | 17.88 | 7.54 | 25.42 |
| 16 | 221.46 | -7.5 | -20.55 | 17.30 | 7.04 | 24.34 |
| 17 | 221.22 | -8 | 0.47 | 17.80 | 6.97 | 24.77 |
| 18 | 225.10 | -8.5 | -7.76 | 17.63 | 7.23 | 24.86 |
| 19 | 231.11 | -9 | -12.02 | 17.29 | 7.42 | 24.70 |
| 20 | 236.76 | -9.5 | -11.30 | 16.98 | 7.65 | 24.63 |
| 21 | 242.53 | -10 | -11.54 | 16.67 | 7.88 | 24.56 |
| 22 | 246.08 | -10.5 | -7.10 | 16.52 | 8.31 | 24.82 |
| 23 | 244.98 | -11 | 2.21 | 16.77 | 8.18 | 24.95 |
| 24 | 255.35 | -11.5 | -20.74 | 16.41 | 6.96 | 23.37 |
| 25 | 256.07 | -12 | -1.45 | 16.44 | 7.27 | 23.71 |
| 26 | 261.22 | -12.5 | -10.28 | 16.18 | 7.74 | 23.92 |
| 27 | 266.38 | -13 | -10.33 | 15.93 | 8.27 | 24.20 |
| 28 | 271.03 | -13.5 | -9.29 | 15.71 | 9.02 | 24.73 |
| 29 | 269.81 | -14 | 2.44 | 15.85 | 9.98 | 25.84 |
| 30 | 277.69 | -14.5 | -15.76 | 15.58 | 0.00 | 15.58 |
| 31 | 275.59 | -15 | 4.20 | | | |

Dans ce second exemple, on identifie un minimum pour la somme des variances, à savoir pour le « capteur 11 » situé à une profondeur de -5m.

On en déduit donc que l'interface entre les phases gazeuse et liquide du fluide contenu dans le réservoir de séparation gravitaire se situe au niveau du capteur 11 à une profondeur plus précisément calculée par régression linéaire de -5,04m dans le réservoir.

Bien entendu, il est possible d'envisager d'autres algorithmes que celui décrit précédemment pour déterminer le niveau d'interface de phase à partir des mesures de déformation recueillies des capteurs de déformation à fibres optiques à réseaux de Bragg.

## Revendications

1. Dispositif pour la détermination du niveau d'interface de phase d'un système polyphasique, comprenant :
un réservoir (2) destiné à recevoir un système polyphasique (4) comprenant au moins deux fluides ayant des phases (4a, 4b, 4c) distinctes;
un tube (6) plongé verticalement à l'intérieur du réservoir, ledit tube étant destiné à être rempli d'un fluide (22) en équi-pression avec le fluide contenu dans le réservoir au niveau d'un ciel dudit réservoir, le tube comprenant une pluralité de capteurs de pression différentielle par membrane espacés verticalement les uns des autres le long du tube pour mesurer la différence de pression entre les fluides contenus et stratifiés en hauteur dans le réservoir et le fluide contenu dans le tube,
**caractérisé en ce que** chaque capteur de pression différentielle (12) comprend une membrane (14) étanche résistante à la corrosion qui est montée dans un orifice (16) du tube et qui est fixée à un capteur de déformation à fibre optique à réseau de Bragg (24), la déformation de ladite membrane étant destinée à mesurer un différentiel de pression entre, d'une part le mélange polyphasique (4) contenu dans le réservoir, et d'autre part le fluide (22) contenu dans le tube ; et **en ce que**
les orifices (16) du tube dans lesquels sont montées les membranes des capteurs de pression différentielle sont positionnés sur plusieurs faces latérales (10) du tube, chaque face latérale du tube étant munie du même nombre (n) de capteurs de pression différentielle (12) espacés d'un même pas (p) en hauteur depuis une hauteur initiale (H1-H4) différente à partir d'une extrémité inférieure du tube afin d'augmenter la résolution spatiale de la mesure.

2. Dispositif selon la revendication 1, dans lequel les membranes (14) des capteurs de pression différentielle s'étendent sur toute la hauteur du réservoir.

3. Dispositif selon l'une des revendications 1 et 2, dans lequel les capteurs de déformation à fibres optiques à réseaux de Bragg (24) sont fixés au centre de la membrane (14) de chaque capteur de pression différentielle (12).

4. Dispositif selon l'une quelconque des revendications 1 à 3, dans lequel les capteurs de déformation à fibres optiques à réseaux de Bragg (24) sont répartis en plusieurs réseaux indépendants de capteurs de déformation afin d'obtenir une redondance de la chaîne de mesure.

5. Dispositif selon l'une quelconque des revendications 1 à 4, dans lequel le tube (6) comprend une cavité centrale (18) destinée à être remplie d'un fluide (22) en équi-pression avec le fluide contenu dans le réservoir au niveau du ciel dudit réservoir, ladite cavité centrale étant fermée à une extrémité inférieure et obturée à une extrémité supérieure par un soufflet de dilatation (20).

6. Dispositif selon l'une quelconque des revendications 1 à 5, dans lequel les capteurs à fibres optiques à réseaux de Bragg (24) cheminent longitudinalement à l'intérieur du tube.

7. Procédé de détermination du niveau d'interface de phase dans un réservoir recevant un système polyphasique (4) au moyen d'un dispositif selon l'une quelconque des revendications 1 à 6, comprenant :
pour chaque capteur de pression différentielle Cⱼ, avec 1<j≤n, le calcul de la pente de la droite de mesures de pression différentielle associée aux deux capteurs de pression différentielle Cⱼ₋₁, Cⱼ ;
pour chaque capteur de pression différentielle Cⱼ, avec 2<j<n, le calcul de la variance associée à chaque ensemble de capteurs C₂ à Cⱼ de la pente de la droite de mesures de pression différentielle associée aux deux capteurs de pression différentielle Cⱼ₋₁, Cⱼ ;
pour chaque capteur de pression différentielle Cⱼ, avec 2<j<n, le calcul de la variance associée à chaque ensemble de capteurs Cⱼ₊₁ à Cₙ de la pente de la droite de mesures de pression différentielle associée aux deux capteurs de pression différentielle Cⱼ₋₁, Cⱼ ;
pour chaque capteur de pression différentielle Cⱼ, avec 2<j<n, le calcul de la somme des deux variances précédemment calculées ;
la localisation d'au moins un minimum local de la somme des deux variances précédemment calculées pour identifier le capteur Cⱼ correspondant à un niveau d'interface de phase ; et
l'intersection de la droite de régression linéaire des mesures des capteurs Cⱼ à C₁ avec la droite de régression linéaire des mesures des capteurs Cⱼ₊₁ à Cₙ pour identifier la hauteur du niveau d'interface de phase.

8. Procédé selon la revendication 7, dans lequel, en cas de localisation de deux minima locaux qui identifient deux capteurs Cⱼ et Cₖ, l'intersection de la droite de régression linéaire des mesures des capteurs de pression différentielle Cⱼ à C₁ avec la droite de régression linéaire des mesures des capteurs de pression différentielle Cⱼ₊₁ à Cₖ identifie précisément une première hauteur de niveau d'interface de phase, et l'intersection de la droite de régression linéaire des mesures des capteurs de pression différentielle Cₖ₊₁ à Cₙ avec la droite de régression linéaire des mesures des capteurs de pression différentielle Cⱼ₊₁ à Cₖ identifie précisément une deuxième hauteur de niveau d'interface de phase différente de la première hauteur.

9. Procédé selon l'une des revendications 7 et 8, dans lequel le calcul des pentes de droites de régression linéaire est réalisé par la méthode des moindres carrés.

10. Procédé selon l'une quelconque des revendications 7 à 9, dans lequel le tube du dispositif est rempli d'un liquide ayant un point bas de congélation et un point haut d'ébullition.

## Patentansprüche

1. Vorrichtung zur Bestimmung des Phasengrenzspiegels eines mehrphasigen Systems, umfassend:
einen Behälter (2), der dazu bestimmt ist, ein mehrphasiges System (4) aufzunehmen, das mindestens zwei Fluide umfasst, die getrennte Phasen (4a, 4b, 4c) aufweisen,
ein Rohr (6), das vertikal in das Innere des Behälters eingetaucht ist, wobei das Rohr dazu bestimmt ist, mit einem Fluid (22) unter gleichem Druck wie das in dem Behälter im Bereich eines Scheitels des Behälters enthaltene Fluid gefüllt zu werden, wobei das Rohr mehrere Differenzdruck-Membransensoren (12), die entlang des Rohrs vertikal voneinander beabstandet sind, zum Messen der Druckdifferenz zwischen den in dem Behälter enthaltenen und in der Höhe übereinandergeschichteten Fluiden und dem in dem Rohr enthaltenen Fluid umfasst,
**dadurch gekennzeichnet, dass** jeder Differenzdrucksensor (12) eine dichte korrosionsbeständige Membran (14) umfasst, die in einer Öffnung (16) des Rohrs montiert ist und die an einem optischen Faser-Bragg-Gitter-Verformungssensor (24) befestigt ist, wobei die Verformung der Membran dazu bestimmt ist, eine Druckdifferenz zwischen einerseits dem mehrphasigen Gemisch (4), das in dem Behälter enthalten ist, und andererseits dem Fluid (22) zu messen, das in dem Rohr enthalten ist, und dadurch, dass
die Öffnungen (16) des Rohrs, in dem die Membranen der Differenzdrucksensoren montiert sind, auf mehreren seitlichen Flächen (10) des Rohrs positioniert sind, wobei jede seitliche Fläche des Rohrs mit einer gleichen Anzahl (n) von Differenzdrucksensoren (12) versehen ist, die in einem gleichen Abstand (p) in der Höhe von einer unterschiedlichen Ausgangshöhe (H1-H4) ausgehend von einem unteren Ende des Rohrs beabstandet sind, um die räumliche Auflösung der Messung zu erhöhen.

2. Vorrichtung nach Anspruch 1, wobei die Membranen (14) der Differenzdrucksensoren sich über die gesamte Höhe des Behälters erstrecken.

3. Vorrichtung nach einem der Ansprüche 1 und 2, wobei die optischen Faser-Bragg-Gitter-Verformungssensoren (24) in der Mitte der Membran (14) von jedem Differenzdrucksensor (12) befestigt sind.

4. Vorrichtung nach einem der Ansprüche 1 bis 3, wobei die optischen Faser-Bragg-Gitter-Verformungssensoren (24) in mehrere unabhängige Gitter von Verformungssensoren verteilt sind, um eine Redundanz der Messkette zu erhalten.

5. Vorrichtung nach einem der Ansprüche 1 bis 4, wobei das Rohr (6) einen mittleren Hohlraum (18) umfasst, der dazu bestimmt ist, mit einem Fluid (22) unter gleichem Druck wie das in dem Behälter im Bereich des Scheitels des Behälters enthaltene Fluid gefüllt zu werden, wobei der mittlere Hohlraum an einem unteren Ende geschlossen ist und an einem oberen Ende von einem Dehnungsausgleicher (20) abgesperrt ist.

6. Vorrichtung nach einem der Ansprüche 1 bis 5, wobei die optischen Faser-Bragg-Gitter-Verformungssensoren (24) längs im Inneren des Rohrs verlaufen.

7. Verfahren zur Bestimmung des Phasengrenzspiegels in einem Behälter, der ein mehrphasiges System (4) aufnimmt, mittels einer Vorrichtung nach einem der Ansprüche 1 bis 6, umfassend:
für jeden Differenzdrucksensor Cⱼ, mit 1 < j ≤ n, die Berechnung der Steigung der Geraden von Differenzdruckmessungen, die mit den zwei Differenzdrucksensoren Cⱼ₋₁, Cⱼ verbunden ist,
für jeden Differenzdrucksensor Cⱼ, mit 2 < j < n, die Berechnung der Varianz, die mit jeder Menge von Sensoren C₂ bis Cⱼ der Steigung der Geraden von Differenzdruckmessungen verbunden ist, die mit den zwei Differenzdrucksensoren Cⱼ₋₁, Cⱼ verbunden ist,
für jeden Differenzdrucksensor Cⱼ, mit 2 < j < n, die Berechnung der Varianz, die mit jeder Menge von Sensoren Cⱼ₊₁ bis Cₙ der Steigung der Geraden von Differenzdruckmessungen verbunden ist, die mit den zwei Differenzdrucksensoren Cⱼ₋₁, Cⱼ verbunden ist,
für jeden Differenzdrucksensor Cⱼ, mit 2 < j < n, die Berechnung der Summe der zwei vorhergehend berechneten Varianzen,
die Lokalisierung von mindestens einem lokalen Minium der Summe der zwei vorhergehend berechneten Varianzen, um den Sensor Cⱼ zu identifizieren, der einem Phasengrenzspiegel entspricht, und
den Schnitt der linearen Regressionsgeraden der Messungen der Sensoren Cⱼ bis C₁ mit der linearen Regressionsgeraden der Messungen der Sensoren Cⱼ₊₁ bis Cₙ, um die Phasengrenzspiegelhöhe zu identifizieren.

8. Verfahren nach Anspruch 7, wobei im Fall der Lokalisierung von zwei lokalen Minima, die zwei Sensoren Cⱼ und Cₖ identifizieren, der Schnitt der linearen Regressionsgeraden der Messungen der Differenzdrucksensoren Cⱼ bis C₁ mit der linearen Regressionsgeraden der Messungen der Differenzdrucksensoren Cⱼ₊₁ bis Cₖ präzise eine erste Phasengrenzspiegelhöhe identifiziert und der Schnitt der linearen Regressionsgeraden der Messungen der Differenzdrucksensoren Cₖ₊₁ bis Cₙ mit der linearen Regressionsgeraden der Messungen der Differenzdrucksensoren Cⱼ₊₁ bis Cₖ präzise eine zweite Phasengrenzspiegelhöhe identifiziert, die sich von der ersten Höhe unterscheidet.

9. Verfahren nach einem der Ansprüche 7 und 8, wobei die Berechnung der Steigungen der linearen Regressionsgeraden durch die Methode der kleinsten Quadrate ausgeführt wird.

10. Verfahren nach einem der Ansprüche 7 bis 9, wobei das Rohr der Vorrichtung mit einer Flüssigkeit gefüllt wird, die einen niedrigen Gefrierpunkt und einen hohen Siedepunkt aufweist.

## Claims

1. A device for determining the phase interface level of a multiphase system, comprising:
a tank (2) intended to receive a multiphase system (4) comprising at least two fluids having distinct phases (4a, 4b, 4c);
a tube (6) vertically immersed inside the tank, said tube being intended to be filled with a fluid (22) at equal pressure with the fluid contained in the tank at the level of a headspace of said tank, the tube comprising a plurality of differential pressure sensors per membrane (12) which are spaced apart vertically from each other along the tube to measure the pressure difference between the fluids contained and stratified in height in the tank and the fluid contained in the tube
charaterised in that each differential pressure sensor (12) comprises a corrosion-resistant sealed membrane (14) which is mounted in an orifice (16) of the tube and which is fixed to a Bragg grating optical fiber strain sensor (24), the strain of said membrane being intended to measure a differential of pressure between, on the one hand, the multiphase mixture (4) contained in the tank and, on the other hand, the fluid (22) contained in the tube; and in that
the orifices (16) of the tube in which the membranes of the differential pressure sensors are mounted are positioned on several lateral faces (10) of the tube, each lateral face of the tube being provided with the same number (n) of differential pressure sensors (12) spaced apart at the same pitch (p) in height from a different initial height (H1-H4) from a lower end of the tube in order to increase the spatial resolution of the measurement.

2. The device according to claim 1, wherein the membranes (14) of the differential pressure sensors extend over the entire height of the tank.

3. The device according to any of claims 1 and 2, wherein the Bragg grating optical fiber strain sensors (24) are fixed to the center of the membrane (14) of each differential pressure sensor (12).

4. The device according to any one of claims 1 to 3, wherein the Bragg grating optical fiber strain sensors (24) are distributed in several independent strain sensor gratings in order to obtain redundancy of the measurement chain.

5. The device according to any one of claims 1 to 4, wherein the tube (6) comprises a central cavity (18) intended to be filled with a fluid (22) at equal pressure with the fluid contained in the tank at the level of a headspace of said tank, said central cavity being closed at a lower end and obstructed at an upper end by an expansion bellows (20).

6. The device according to any one of claims 1 to 5, wherein the Bragg grating optical fiber sensors (24) progress longitudinally inside the tube.

7. A method for determining the phase interface level in a tank receiving a multiphase system (4) by means of a device according to any one of claims 1 to 6, comprising:
for each differential pressure sensor Cⱼ, with 1<j≤n, the calculation of the slope of the differential pressure measurement line associated with the two differential pressure sensors Cⱼ₋₁, Cⱼ;
for each differential pressure sensor Cⱼ, with 2<j<n, the calculation of the variance associated with each set of sensors C₂ to Cⱼ of the slope of the differential pressure measurement line associated with the two differential pressure sensors Cⱼ₋₁, Cⱼ;
for each differential pressure sensor Cj, with 2<j<n, the calculation of the variance associated with each set of sensors Cⱼ₊₁ to Cₙ of the slope of the differential pressure measurement line associated with the two differential pressure sensors Cⱼ₋₁, Cⱼ;
for each differential pressure sensor Cⱼ, with 2<j<n, the calculation of the sum of the two previously calculated variances;
the localization of at least a local minimum of the sum of the two previously calculated variances in order to identify the sensor Cⱼ corresponding to a phase interface level; and
the intersection of the linear regression line of the measurements from the sensors Cⱼ to C₁ with the linear regression line of the measurements from the sensors Cⱼ₊₁ to Cₙ in order to identify the height of the phase interface level.

8. The method according to claim 7, wherein, in case of localization of two local minima which identify two sensors Cⱼ and Cₖ, the intersection of the linear regression line of the measurements from the differential pressure sensors Cⱼ to C₁ with the linear regression line of the measurements from the differential pressure sensors Cⱼ₊₁ to Cₖ accurately identifies a first phase interface level height, and the intersection of the linear regression line of the measurements from the differential pressure sensors Cₖ₊₁ to Cₙ with the linear regression line of the measurements from the differential pressure sensors Cⱼ₊₁ to Cₖ accurately identifies a second phase interface level height different from the first height.

9. The method according to any of claims 7 and 8, wherein the calculation of the slopes of linear regression lines is carried out by the method of least squares.

10. The method according to any one of claims 7 to 9, wherein the tube of the device is filled with a liquid having a low freezing point and a high boiling point.
